# EUROPEAN PATENT APPLICATION

(11) **EP 0 649 876 A1**
(43) Date of publication of application: **26.04.1995**
(21) Application number: 94307229.8
(22) Date of filing: 03.10.1994
(51) Int. Cl.: C08L 71/12, C08G 81/00, C08G 77/42, C08G 77/46, C08G 65/48

(54) **Method for making polyarylene ether-organopolysiloxane copolymers**

(30) Priority: 21.10.1993 US 139134
(71) Applicant: GENERAL ELECTRIC COMPANY, Schenectady, NY 12345 (US)
(72) Inventor: Blohm, Margaret Louise, Schenectady, New York 12309 (US); Brown, Sterling Bruce, Schenectady, New York 12309 (US); Seeger, George Thomas, Scotia, New York 12302 (US); Anderson, Patricia Pike, Williamstown, Massachusetts 01267 (US)
(74) Representative: Pratt, Richard Wilson

(57) **Abstract**

A method is provided for making polyarylene ether-organopolysiloxane copolymers by melt extruding while vacuum-venting a blend of a polyphenylene ether functionalized with an organo anhydride or organo carboxy group and an organo amino functionalized organopolysiloxane.

## Description

### Cross Reference to Related Application

Reference is made to copending application RD-23,112, US Serial No. 08/139,140 filed concurrently herewith.

### Background of the Invention

The present invention relates to a method for making polyarylene ether-organopolysiloxane copolymers utilizing organic anhydride or carboxy functionalized polyarylene ether and organo amine functionalized organopolysiloxane. More particularly, the present invention relates to the application of vacuum-venting during the reactive coextrusion of functionalized polyarylene ether and functionalized organopolysiloxane.

As shown by Shea et al., U.S. patent 4,814,392, silicone-polyarylene ether block copolymers can be made by effecting reaction between amino terminated polydiorganosiloxane and anhydride functionalized polyarylene ether. As taught by Shea et al., the polyarylene ether-organopolysiloxane copolymer can be made by a solution technique utilizing an inert organic solvent, such as chloroform, toluene or chlorobenzene under inert conditions. Although the polyarylene ether-organopolysiloxane copolymers of Shea et al. are valuable thermoplastic high performance materials, Shea et al. utilize an organic solvent to facilitate reaction between the polyarylene ether component and the organopolysiloxane component. It would be desirable therefore to provide a method for making polyarylene ether-organopolysiloxane copolymers without the employment of a volatile organic solvent to minimize environmental risks.

### Summary of the Invention

The present invention is based on the discovery that improved copolymer synthesis can be obtained, if polyarylene ether-organopolysiloxane copolymers are made by employing vacuum-venting during the reactive coextrusion of functionalized polyarylene ether and functionalized organopolysiloxane Copolymer formation is favored, if the polyarylene ether is functionalized with anhydride or carboxy groups, and the organopolysiloxane is functionalized with organo amine groups. As used hereinafter the expression "functionalized polyarylene ether" or "Funct. PPE" means anhydride or carboxy containing polyarylene ether which has less than .02% by weight of reactive aryl OH and an I.V. of about 0.19 to 0.70 dl/g in chloroform at 25°C.

### Statement of the Invention

There is provided by the present invention, a method for making polyarylene etherorganopolysiloxane copolymers, comprising melt extruding while vacuum venting, a thermoplastic blend comprising by weight, 80% to 99.9% of polyarylene ether functionalized with a member selected from the group consisting of organo anhydride and organo carboxy, and 20% to 0.1% of an organopolysiloxane functionalized with organo amine.

The polyarylene ethers which can be utilized in the practice of the present invention to make the polyarylene ether-organopolysiloxane copolymers, comprise a plurality of structural units having the formula, 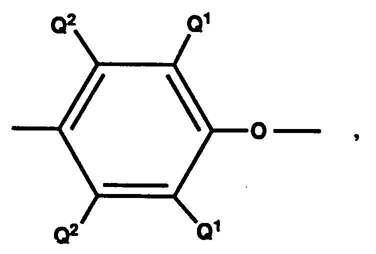
wherein each of said units, independently, each Q¹ is halogen, primary or secondary lower alkyl (i.e. alkyl containing up to 7 carbon atoms), phenyl haloalkyl, aminoalkyl, hydrocarbonoxy, or halohydrocarbonoxy wherein at least two carbon atoms separate the halogen and oxygen atoms; and each Q² is independently hydrogen, halogen, primary or secondary lower alkyl, phenyl, haloalkyl, hydrocarbonoxy or halohydrocarbonoxy as defined by Q¹. Examples of suitable primary lower alkyl groups are methyl, ethyl, n-propyl, n-butyl, isobutyl, n-amyl, isoamyl, 2-methylbutyl, n-hexyl, 2,3-dimethylbutyl, 2-,3- or 4-methylpentyl and the corresponding heptyl groups. Examples of secondary lower alkyl groups are isopropyl, sec-butyl and 3-pentyl. Preferably, any alkyl radicals are straight chain rather than branched. Most often, each Q¹ is alkyl or phenyl especially C₍₁₋₄₎ alkyl and each Q² is hydrogen.

Both homopolymer and copolymer polyarylene ethers are known. The homopolymers include those containing, for example, 2,6-dimethyl-1,4-phenylene ether units. The copolymers include random copolymers containing such units in combination with (for example) 2,3,6-trimethyl-1,4-phenylene ether units. Many suitable random copolymers as well as homopolymers, are disclosed in the patent literature.

Also known are polyphenylene ethers containing moieties which modify properties, such as molecular weight, melt viscosity and/or impact strength. Such polymers are described in the patent literature and may be prepared by grafting onto the polyphenylene ether in known manner such vinyl monomers as acrylonitrile and vinylaromatic compounds (e.g., styrene), or such polymers as polystyrenes and elastomers. The product typically contains both grafted and ungrafted moieties. Other polyphenyleneethers are coupled polymers in which the coupling agent is reacted in known manner with the hydroxy groups of two polyphenylene ether chains to produce a higher molecular weight polymer containing the reaction product of the hydroxy groups and the coupling agent. Illustrative coupling agents are low molecular weight polycarbonates, quinones, heterocycles and formals.

Polyphenylene ethers are typically prepared by the oxidative coupling of at least one corresponding monohydroxyaromatic compound. Particularly useful and readily available monohydroxyaromatic compounds are 2,6-xylenol (wherein each Q¹ is methyl and each Q² is hydrogen), whereupon the polymer may be characterized as a poly(2,6-dimethyl-1,4-phenylene ether), and 2,3,6-trimethylphenol (wherein each Q¹ and one Q² is methyl and the other Q² is hydrogen).

A variety of catalyst systems are known for the preparation of polyphenylene ethers by oxidative coupling. For the most part, they contain at least one metallic compound such as a copper, manganese or cobalt compound, usually in combination with various other materials.

Catalyst systems containing a copper compound are disclosed, for example, in U.S. pat. nos. 3,306,874, 3,306,875, 3,914,266 and 4,028,341. They are usually combinations of cuprous or cupric ions, halide (i.e. chloride, bromide or iodide) ions and at least one amine.

Other catalyst systems contain manganese compounds. They are generally alkaline systems in which divalent manganese is combined with such anions as halide, alkoxide or phenoxide. Most often, the manganese is present as a complex with one or more complexing and/or chelating agents such as dialkylamines, alkanolamines, alkylenediamines, o-hydroxyaromatic aldehydes, o-hydroxyazo compounds, ω-hydroxyoximes (monomeric and polymeric), o-hydroxyaryl oximes and β-diketones. Also known are cobalt-containing catalyst systems. Suitable manganese and cobalt-containing catalyst systems for polyphenylene ether preparation are known in the art by reason of disclosure in numerous patents and publications.

Among the functionalized polyarylene ethers which can be employed in the practice of the present invention, are polyphenylene ether functionalized with trimellitic anhydride acid chloride, referred to hereinafter as "PPE-TAAC" as shown by Aycock et al. U.S.patent 4,642,358. In addition, polyphenylene ether, or "PPE", can be modified with maleic anhydride,referred to hereinafter as "PPE-MA", by coextruding a mixture of polyphenylene ether and maleic anhydride on a suitable twin screw extruder. There can be used from 0.1 to 5 parts by weight of maleic anhydride, per 100 parts of polyphenylene ether. The extruder can be operated at a temperature of from 275°C to 335°C at a suitable pressure.

Organo carboxy functionalized PPE can be made by procedures shown by Chalk et al., J. Polymer Sci. part A-1,7,691-705(1965) and U.S patent 4,654,405.

The organoamine functionalized organopolysiloxanes which can be utilized in the practice of the present invention are preferably amine-terminated polydioganosiloxanes which are included by the formula, 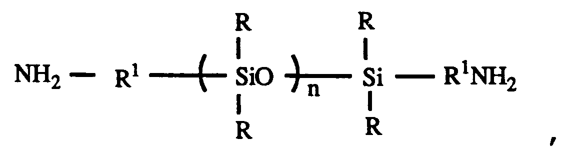
where R is a C₍₁₋₄₎ monovalent hydrocarbon radical or C₍₁₋₁₄₎ monovalent hydrocarbon radical which can be substituted with up to 4 radicals which can be the same, or a mixture thereof, and inert during intercondensation, R¹ is a C₍₁₋₁₄₎ divalent hydrocarbon radical or C₍₁₋₁₄₎ divalent hydrocarbon radicals substituted with from 1-4 radicals or a mixture thereof and inert during intercondensation, and n is an integer having an average value of from about 1 to 500 inclusive, and preferably 5 to 400. R¹ is preferably C₍₁₋₁₄₎ polymethylene.

Procedures for making the aminoorgano terminated polydiorganosiloxane of formula (1) are well known in the art. For example, aminoorgano tetra organodisiloxane can be equilibrated with an octaorganocyclotetrasiloxane, such as octamethylcyclotetrasiloxane, to increase the block length of the polydiorganosiloxane. The corresponding aminoorganotetraorganodisiloxane, such as aminobutyltetramethyldisiloxane can be made by the procedure shown by Prober, U.S. Pat. No. 3,185,719, assigned to the same assignee as the present invention. Prober reacts allycyanide with dimethylchlorosilane and then hydrolyzes the resulting cyanopropyldimethylchlorosilane in the presence of sodium bicarbonate to produce the 1,3-bis-γ-cyanopropyltetramethyldisiloxane which then can be reduced with hydrogen in the presence of Raney nickel to yield 1,3-bis-δ-aminobutyltetramethyldisiloxane. In a similar manner, 1,3-aminopropyl terminated polydimethylsiloxane can be obtained by the equilibration of 1,3-bis-γ-aminopropyltetramethyldisiloxane which is prepared by utilizing acrylonitrile in a manner similar to that shown for the production of aminobutyltetramethyldisiloxane utilizing allylcyanide.

The polyarylene ether-organopolysiloxane copolymers of the present invention can be made by melt extruding a blend of anhydride or carboxy functionalized polyarylene ether with the organo amine functionalized organopolysiloxane at temperatures in the range of from 275°C to 320°C. During extrusion, vacuum-venting of the mixture can be employed with pressures in the range of from 10 torr to 500 torr, and preferentially 20 torr to 100 torr. There can be utilized sufficient functionalized PPE and functionalized organopolysiloxane to provide substantially equal molar amounts of PPE functional groups, per amine group of organopolysiloxane. It has been found that effective results can be obtained in the practice of the method of the present invention if functionalized PPE having an intrinsic viscosity in the range of from 0.19 to 0.70 dl/g in chloroform at 25°C is used.

In order that those skilled in the art will be better able to practice the present invention, the following example is given by way of illustration and not by way of limitation. All parts are by weight unless otherwise indicated.

### Example

Polyphenylene ether functionalized with trimellitic anhydride acid chloride having an I.V. in the range of 0.25 to 0.46 dl/g in chloroform at 25°C and aminopropyl terminated polydimethylsiloxane having an average block size of from about 10 to about 20 dimethylsiloxy units were combined in a Henshel mixer. The resulting blends were extruded on a 20 mm Welding Engineers twin screw extruder with counter-rotating non-intermeshing screws. The blends were extruded with vacuum-venting (30-40 torr reading) at 475 rpm and approximately 6 lbs/hr feed rate. Temperature settings were 295°C for the die and the last 4 barrel segments. The feed throat and second barrel segments were set at 65°C and read around 105°C during the actual extrusion. Test parts were molded on a 30-ton Engel machine at 900 C mold temperature at 25.5 sec. cycle time with barrel set temperatures of 280°C (rear), 340°C, 340°C, and 340°C (nozzle).

The functionalized polyphenylene ether (Funct PPE) was used in combination with PPE (polyphenylene ether free of anhydride or carboxy groups) as an equal part mixture. Polydimethylsiloxane fluids (GAPD) were used having terminal aminopropyl groups and an average of about 10 or about 20 dimethylsiloxy units. Blends were melt extruded having from 2 to 5 parts of polydimethylsiloxane per 100 parts of functionalized PPE. The extrudates were evaluated at a thickness of about 1/16 inch for appearance, flame retardance (UL94) and an average flameout time (FOT seconds). The following results were obtained:

**TABLE 1**

| PPE (phr) | Funct PPE (phr) | GAPD10 (phr) | GAPD20 (phr) | Appearance1/16'' MoldedPart | Avg. UL94 FOT(sec) | UL94 |
|---|---|---|---|---|---|---|
| 100 | -- | 0 | 0 | Transparent | 10.2 | V-1 |
| 50 | 50 | 5 | 0 | Opaque | 6.63 | V-1 |
| 50 | 50 | 2 | 0 | Transparent | 3.18 | V-0 |
| 50 | 50 | 0 | 5 | Opaque | 8.83 | V-1 |
| 50 | 50 | 0 | 2 | Translucent | 3.30 | V-0 |

The above results show that transparent or translucent molded parts were obtained when the GAPD10 or 20 were used at the 2 parts level, while opaque parts were obtained at the 5 parts level. It was also found in a separate test that blends of PPE and GAPD fluid were opaque even at the 1-2 part level. Copolymers made from the longer chain polydimethylsiloxane having larger siloxane domains were also found to be translucent rather than transparent.

Flame retardance was measured in accordance with the Ohio State University test (OSU). The total smoke (STOT) and total heat release (HTOT) were measured and compared to a PPE control. PPE TAAC having an I.V. of 0.25 was also evaluted. A GAPD fluid having an average of 10 dimethylsiloxy units was used. The results obtained in the OSU evaluation are shown in the following Table, where except for the last two entries, the second entry of each pair is a repeat blend prepared independently.

**TABLE 2**

| PPE (phr) | Funct PPE (phr) | GAPD10 (phr) | %Reduction OSU HTOT | %Reduction OSU STOT |
|---|---|---|---|---|
| 50 | 50 | 5 | 9.2 | 0 |
| 50 | 50 | 5 | 7.0 | -6.3 |
| 50 | 50 | 2 | 33.6 | 47.1 |
| 50 | 50 | 2 | 28.4 | 31.4 |
| 50 | 50 I.V. (0.25) | 5 | 11.1 | 3.7 |
| 0 | 100 (I.V. (0.25) | 5 | 34.1 | 41.3 |

The above results demonstrate that compatibilization of PPE and GAPD is required for good reduction in both total heat and total smoke release. For blends containing only 2 parts of silicone, there is both excellent reproducibility and better overall reduction in heat and smoke release as compared to blends containing 5 parts of silicone. The blend having an I.V. of 0.25 of PPE and Funct. PPE shows a greater reduction in smoke and total heat compared to PPE alone.

Mechanical properties were also investigated shown in Table 3 below.

**TABLE 3**

| PPE. (phr) | Funct. PPE (phr) | GAPD10 (phr) | Notched Izod Impact (ftlb/in) | Flex Mod (kpsi) | Tensile Elongation |
|---|---|---|---|---|---|
| 100 | -- | 0 | 0.52 | 394 | 30.5 |
| 50 | 50 | 5 | 1.23 | 337 | 30.4 |
| 50 | 50 | 2 | 0.72 | 334 | 36.1 |
| 50 | 50 IV (0.25) | 5 | 0.77 | 335 | 25.0 |
| 0 | 100 IV (0.25) | 5 | 0.53 | 330 | 19.1 |

Improved Notched Izod Impact values are seen when higher levels of GAPD 10 are used.

Although the above example is directed to only a few of the very many variables which can be utilized in the practice of the method of the present invention, it should be understood that the present invention is directed to a much broader variety of functionalized PPE and silicone fluids as set forth in the description preceding this example.

## Claims

1. A method for making polyarylene etherorganopolysiloxane copolymers, comprising melt extruding while vacuum venting, a thermoplastic blend comprising by weight, 80% to 99.9% of polyarylene ether functionalized with a member selected from the group consisting of organo anhydride and organo carboxy, and 20% to 0.1% of an organopolysiloxane functionalized with organo amine.

2. A method in accordance with claim 1, where the polyarylene ether is a polyphenylene ether.

3. A method in accordance with claim 1, where the amine terminated organopolysiloxane is an amine terminated polydimethylsiloxane.
